Europäisches Patentamt

European Patent Office

Office européen des brevets

(19)

(11) Veröffentlichungsnummer: **0 083 679**
**A1**

(12) # EUROPÄISCHE PATENTANMELDUNG

(21) Anmeldenummer: 82100200.3

(22) Anmeldetag: 13.01.82

(51) Int. Cl.³: **A 47 J 37/08**

(43) Veröffentlichungstag der Anmeldung:
20.07.83 Patentblatt 83/29

(84) Benannte Vertragsstaaten:
CH DE FR IT LI NL

(71) Anmelder: Arthur Eugster Elektro-Haushaltgeräte
Hirschhalde 10
CH-8590 Romanshorn(CH)

(72) Erfinder: Eugster, Arthur
Hirschhalde 10
CH-8590 Romanshorn(CH)

(74) Vertreter: Patentanwälte Grünecker, Dr. Kinkeldey, Dr.
Stockmair, Dr. Schumann, Jakob, Dr. Bezold, Meister,
Hilgers, Dr. Meyer-Plath
Maximilianstrasse 58
D-8000 München 22(DE)

(54) Elektrischer Brotröster.

(57) Bei dem elektrischen Brotröster wird als Zeitsteuerelement ein pneumatisches Element bestehend aus Zylinder, (10) Kolben (2) und Feder (30) verwendet. Mittels eines Betätigungselementes (42) läßt sich das die Brotbühne (50, 54) tragende Führungselement (50) aus einer oberen Einlegestellung in eine unter Röststellung bringen und dort verrasten. Ein Mitnehmer (40) wird durch die Bewegung des Kolbens im Zylinder nach oben gezogen und hebt die Verrastung auf. Für den Kolben, den Mitnehmer, das Betätigungselement und das Führungselement sind gemeinsame Führungsmittel vorgesehen.

EP 0 083 679 A1

Fig. 1

0083679

Arthur Eugster - Elektro-Haushaltgeräte          EP 539
Hirschhalde 10, 8590 Romanshorn/Schweiz

Beschreibung

Bekannte elektrische Brotröster besitzen eine Brotbühne, die aus einer oberen Stellung für das Einlegen der Brotscheiben in eine untere Röststellung verstellbar und in dieser verrastbar ist, in der sich die Brotscheiben innerhalb der Röstkammer befinden. Je nach dem gewünschten Bräunungsgrad wird an einem Zeitsteuerelement eine Zeitdauer eingestellt, nach deren Ablauf die Brotbühne aus ihrer Verrastung freigegeben und unter Federzug in die obere Stellung gebracht und über einen elektrischen Schalter die Heizung ausgeschaltet wird. Als Zeitsteuerelement dienen Bimetallstreifen oder ein pneumatisches Element mit einem Kolben, der unter Federeinfluß in einen stationären Zylinder gedrückt wird, wobei die Geschwindigkeit der Kolbenbewegung bestimmt wird durch eine einstellbare Luftauslaßdüse. Bei einem bekannten Brotröster mit einem pneumatischen Element ist die mit dem Kolben verbundene Kolbenstange mit einem Mitnehmerelement versehen, in dessen Bewegungsbahn eine die Verrasterung der Brotbühne in ihrer Röststellung bewirkende Klinke liegt, die durch den laufenden Kolben nach der eingestellten Zeitdauer gelöst wird, um die Brotbühne freizugeben. Bekannte Brotröster dieser Art weisen jedoch überlicherweise eine relativ aufwendige Mechanik auf oder sie haben sich als störanfällig erwiesen.

Der vorliegendenErfindung liegt die Aufgabe zugrunde, einen elektrischen Brotröster anzugeben, dessen mechanischer Aufbau einfach und dennoch zuverlässig ausgebildet ist. Diese Aufgabe wird durch einen im Anspruch 1 angegebenen Brotröster gelöst.

Durch die Anordnung zweier Säulen parallel zur Zylinderachse wird eine gemeinsame Führung für die Brotbühne und das Mitnehmerelement geschaffen, so daß sich eine stabile Anordnung mit einer geringen Anzahl von Teilen ergibt, deren Form verhältnismäßig einfach ist.

Eine bevorzugte Weiterbildung des erfindungsgemäßen Brotrösters ist dadurch gekennzeichnet, daß der von den Säulen geführte Teil der Brotbühne mit in den Säulen nach oben ragenden Elementen versehen ist, von denen mindestens eines einen Rastfinger besitzt, der in der Röststellung der Brotbühne hinter einen Anschlag greift. Die in den Säulen geführtenElemente tragen zu einer weiteren Stabilisierung und verbesserten Führung der Brotbühne bei. Da der Rastfinger an den Elementen angebracht ist und das Mitnehmerelement in gleicher Weise geführt ist, wie die Brotbühne, ergibt sich eine äußerst kompakte Anordnung.

Werden gemäß einer bevorzugten Weiterbildung der Erfindung die an der Brotbühne angebrachten Elemente als in den Säulen geführte Rohre ausgebildet, so läßt sich der Rastfinger in einfacher Weise als ausgestanzte und nach außen gedrückte federnde Zunge ausbilden. Als Anschlag kann bevorzugt der am Boden des Zylinders des Zeitsteuerelementes dienen.

Gemäß einer anderen Weiterbildung der Erfindung ergibt sich eine besonders stabile Anordnung dadurch, daß als weitere Führung ein durch Zentralöffnungen in dem Mitnehmer und dem von den Säulen geführten Teil der Brotbühne konzentrisch zur Zylinderachse verlaufendes Führungsrohr vorgesehen ist, in dem die Kolbenstange geführt ist.

Wir der erfindungsgemäße Brotröster derart weitergebildet, daß die rohrförmigen Säulen in ihrem unteren Bereich an den einander zugekehrten Seiten offen sind, vorzugsweise einen im wesentlichen halbkreisförmigen Querschnitt besitzen, dann können die Längskanten der offenen Säulen und/oder die rohrförmigen Elemente der Brotbühne als Führung dienen.

Gemäß einer anderen bevorzugten Ausführungsform der Erfindung ergibt sich eine weitere Vereinfachung dadurch, daß auch das Betätigungselement an den Säulen und/oder auf dem konzentrischen Führungsrohr geführt ist. Somit werden für die verschiedenen Elemente keine eigenen Führungen sondern nur eine gemeinsame Führung benötigt.

Wird der erfindungsgemäße Brotröster derart weitergebildet, daß das Betätigungselement und das Mitnehmerelement gegeneinander in begrenztem Ausmaß verschiebbar gekuppelt sind, dann wird das Betätigungselement vom Mitnehmer über eine erhebliche Strecke seines Weges mitgenommen, so daß bei der Freigabe der Verrastung nicht die Brotbühne das Betätigungselement belastet.

Besonders einfach wird der erfindungsgemäße Brotröster dann, wenn das Mitnehmerelement und das Betätigungselement von einem einzigen Teil gebildet werden. In diesem Falle wird der Kolbenweg dem Bewegungsausmaß der Brotbühne entsprechen.

Wird der erfindungsgemäße Brotröster dadurch weitergebildet, daß sich in den Säulen Zugfedern vom oberen Ende der Säulen zu den Elementen der Brotbühne erstrecken, dann ergibt sich eine besonders kompakte Anordnung, die als fertige Einheit in den Brotröster eingesetzt werden kann.

Ein Ausführungsbeispiel der Erfindung wird unter Bezugnahme auf die Zeichnungen beschrieben. Es zeigen:

Figur 1 eine Seitenansicht teilweise im Schnitt auf die Führungs- und Steueranordnung, wie sie bei dem Ausführungsbeispiel des erfindungsgemäßen Brotrösters Verwendung findet;

Figur 2 einen Querschnitt durch die Führungs- und Steueranordnung längs der Linie II-II in Figur 1;

Figur 3 einen Querschnitt durch die Führungs- und Steueranordnung nach Figur 1 längs der Linie III-III;

Figur 4 einen Querschnitt durch die Führungs- und Steueranordnung der Figur 1 längs der Linie IV-IV;

Figur 5 einen Querschnitt durch die Führungs- und Steueranordnung der Figur 1 längs der Linie V-V, und

Figur 6 in vergrößerter Darstellung als Seitenansicht eines Rastgliedes.

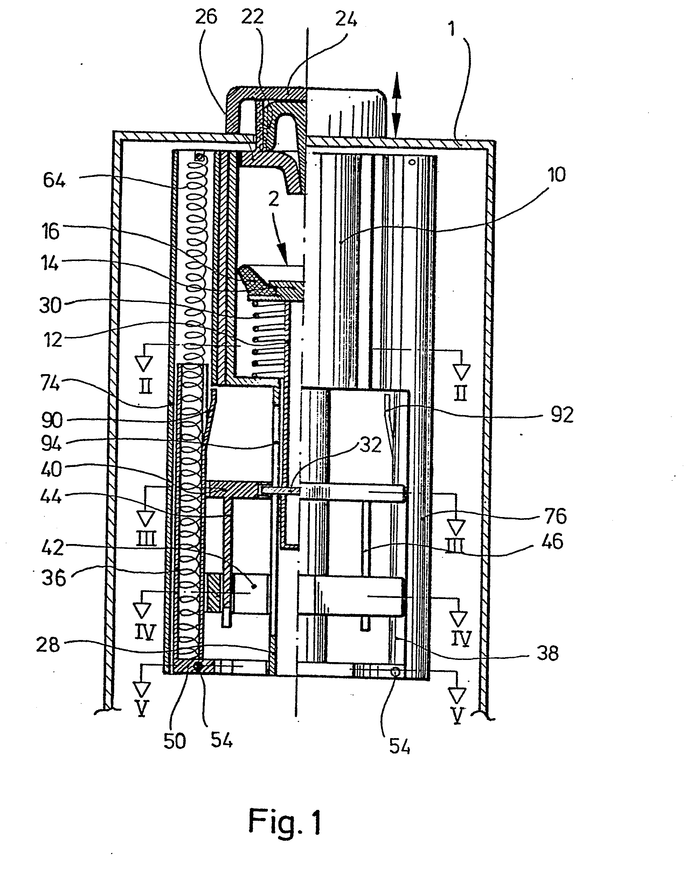

Figur 1 zeigt eine Seitenansicht der Führungs- und Steueranordnung des Brotrösters von der Röstkammer her gesehen. Die Anordnung befindet sich in einem Gehäuse 1 des Brotrösters.

Bei der Ausführungsform wird ein pneumatisches Steuerelement verwendet mit einem Zylinder 10, in dem ein Kolben 2 geführt ist, der aus einer eine Dichtung 16 tragenden Platte 14 besteht, an deren Unterseite eine vorzugsweise rohrförmige Kolbenstange 12 angesetzt ist. Der Zylinder 10 ist nach oben mit einer Deckplatte 26 abgeschlossen, in der eine einstellbare Düse 22 ausgebildet ist, deren Luftdurchlaß mittels eines Rändelrades 24 verengt oder erweitert werden kann.

Konzentrisch zur Längsachse des Zylinders 10 ist an dessen Unterseite ein Führungsrohr 28 angebracht, in das sich durch eine Öffnung am Boden des Zylinders 10 die Kolbenstange 12 erstreckt. Das Führungsrohr besitzt zumindest in einem oberen Teil diametral gegenüberliegende Schlitze 94, 96, in denen die Enden eines am unteren Ende der Kolbenstange 12 angebrachten Stiftes 32 geführt sind.

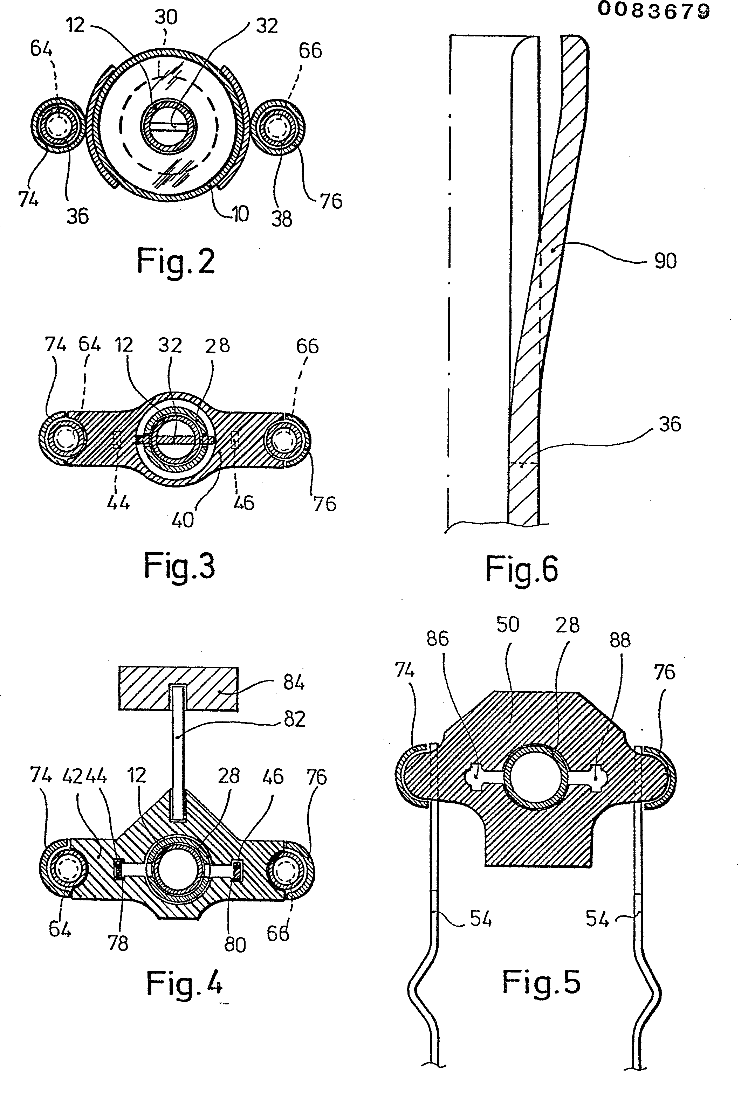

Die überstehenden Enden des Stiftes 32 sind an der Zentralöffnung eines Mitnehmers 40 gehalten, der zwei diametral gegenüberliegende Ausleger besitzt (Figur 3). Der Mitnehmer 40 ist an seiner Unterseite mit zwei parallel zur Längsachse des Führungsrohres 28 in Abstand von diesem verlaufenden Führungsstiften 44, 46 versehen, deren Enden sich gleitend in entsprechende Öffnungen 78, 80 in einem Einstellhebel 42 erstrecken, der mit seiner Zentralöffnung ebenfalls auf dem Führungsrohr 28 gleitend geführt ist. Der Einstellhebel 42 besitzt ähnliche diametral gegenüberliegende Ausleger wie der Mitnehmer 40. Wie Figur 4 zeigt, ist der Einstellhebel 42 über einen von ihm abstehenden Arm 82 mit einer Taste 84 versehen, die außerhalb des Gehäuses des Brotrösters liegt und über die die Brotbühne aus ihrer oberen in die untere Stellung unter entsprechendem Druck gebracht werden kann.

Auf dem gleichen Führungsrohr 28 ist auch ein Führungselement 50 für die Brotbühne mit seiner Zentralöffnung geführt. Wie Figur 5 zeigt, ist das Führungselement 50 ebenfalls plattenförmig wie der Mitnehmer 40 und der Einstellhebel 42 ausgebildet mit entsprechenden diametral gegenüberliegenden Auslegern. In diesen sind annähernd senkrecht zur Längsachse des Führungsrohres 28 Brotbühnenbügel 54 eingesetzt, die sich bei eingebauter Führungs- und Steueranordnung praktisch über die Länge der Röstkammer erstrecken.

Die gemeinsame zentrale Führung des Mitnehmers 40, des Einstellhebels 42 und des Führungselements 50 auf dem Führungsrohr 28 mit verhältnismäßig großem Durchmesser gibt der gesamten Anordnung eine gute Stabilität, bei äußerst einfacher Form der genannten Elemente, wobei ein Verkanten weitgehend vermieden wird.

Unterhalb der Platte 14 befindet sich im Zylinder 10 eine Druckfeder 30, die den Kolben in einer oberen Grenzstellung hält, die durch Anschlagen des Mitnehmers 40 an der Unterseite des Zylinders 10 definiert wird.

Vorzugsweise am äußeren Mantel des Zylinders 10 sind zweckmäßigerweise sich diametral gegenüberliegend parallel zueinander und parallel zur Längsachse des Zylinders 10 bzw. des Führungsrohres 28 Säulen 74, 76 vorgesehen, die eine rohrförmige Ausbildung besitzen und insbesondere in ihrem oberen Teil vorzugsweise bis zum Boden des Zylinders 10 einen kreisförmigen Querschnitt besitzen, während der restliche untere Teil der Säulen 74, 76, der sich etwa bis zum unteren Ende des Führungsrohres 28 erstreckt, halbkreisförmig, das heißt auf der jeweiligen Innenseite aufgeschnitten ist. In den Säulen 74, 76 sind Führungsrohre 36, 38 längsverschiebbar angeordnet, deren untere Enden an den Auslegern des Führungselementes 50 befestigt sind. Zugfedern 64, 66 erstrecken sich von den oberen Enden der Säulen 74, 76 in die Führungsrohre 36, 38, in denen sie befestigt sind.

Die Ausleger des Mitnehmers 40 bzw. des Einstellhebels 42 sind an ihren Enden derart geformt, daß sie auf den Führungsrohren 36, 38 und/oder auf den Längskanten der halbkreisförmigen Säulen 74, 76 gleiten.

Die Führungsrohre 36, 38 sind in der Nähe ihrer oberen Enden mit federnden sich von den Führungsrohren 36, 38 nach innen in Richtung des Führungsrohres 28 erstreckenden Rastgliedern, beispielsweise Zungen 90, 92 versehen, die unter den Boden des Zylinders 10, oder einen ähnlichen entsprechenden Anschlag greifen, wenn sich das Führungselement 50 in der unteren Stellung der Brotbühne befindet. Figur 6 zeigt in vergrößerter Darstellung eine der Zungen 90, 92.

Die Arbeitsweise der Führungs- und Steueranordnung gemäß der Ausführungsform des erfindungsgemäßen Brotrösters ist folgende:

Beim Einlegen der Brotscheiben befindet sich der Kolben 2 in seiner oberen Stellung, in der der Mitnehmer 40 vorzugsweise gegen den Boden des Zylinders 10 oder einen anderen entsprechenden Anschlag drückt. Die Brotbühne befindet sich in ihrer oberen Stellung, da das Führungselement 50 durch die Zugfedern 64, 66 soweit nach oben gezogen ist, daß es den Einstellhebel 42 gegen den Mitnehmer 40 drückt. Die Führungsstifte 44, 46 ragen dabei durch Öffnungen 86, 88 in dem Führungselement 50. Je nach gewünschtem Bräunungsgrad ist die Düse 22 mittels des Rändelrades 24 auf eine gewünschte Durchlaßöffnung eingestellt.

Nach Einlegen der Brotscheiben wird unter Druck auf die Taste 84 die Brotbühne, insbesondere die Brotbühnenbügel 54, 56, in ihre untere Stellung gebracht, bei der sich die Brotscheiben innerhalb der Röstkammer befinden. Dies geschieht durch die Abwärtsbewegung des Einstellhebels 42, durch den das Führungselement 50 in eine Stellung gebracht wird, in der die Rastglieder 90, 92 unter den Boden des Zylinders 10 oder einen ähnlichen Anschlag greifen. Der Mitnehmer 40 folgt der Bewegung des Einstellhebels 42, nachdem die Führungsstifte 44 bis zum Anschlag ihrer Enden an dem Einstellhebel 42 ausgezogen sind. Der Mitnehmer 40 nimmt auch den Kolben des Zylinders 10 entgegen dem Druck der Druckfeder 30 mit. Der Zylinderraum füllt sich dabei mit Luft.

Da der Einstellhebel 42 frei auf dem Führungsrohr 28 bzw. zwischen den Führungsrohren 36, 38 geführt ist, beginnt bei seinem Loslassen die Druckfeder 30 entgehen dem im Zylinderraum herrschenden Luftdruck den Kolben und damit auch den Mitnehmer 40 nach oben zu drücken. Je nach eingestellter Düsenöffnung ist die Zeitdauer der Kolbenbewegung bis zum oberen Grenzanschlag unterschiedlich. Beim Einfahren in diese Endposition kommt der Mitnehmer 40 in Eingriff mit den Rastgliedern 90, 92 und drückt diese entgegen ihrer Federkraft soweit nach außen, daß sie vom Boden des Zylinders 10 ausrasten und die Führungsrohre 36, 38 unter Zug der Federn 64, 66 nach oben gezogen werden. Das an den Führungsrohren 36, 38 befestigte Führungselement 50 und die mit letzterem verbundenen Brotbühnenbügel 54, 56 machen diese Bewegung mit, so daß die Brotbühne in ihre obere Stellung gelangt.

Die beschriebene Führungs- und Steueranordnung stellt eine äußerst kompakte Einheit dar, die mit geringsten Befestigungsmitteln, beispielsweise an der Seitenwand der Röstkammer, angebracht werden kann. Es ist somit kein eigenes Gehäuse erforderlich, in dem die Einheit befestigt wird und das in Wirkbeziehung mit den beweglichen Elementen der Einheit steht etwa dadurch, daß die Federn an der Innenseite des Gehäuses angebracht sind. Die verwendeten Teile haben eine sehr einfache Form, so daß für ihre Herstellung keine komplizierten

0083679

Arbeitsgänge erforderlich sind. Insbesondere können der Mitnehmer 40, der Einstellhebel 42 und/ oder das Führungselement 50 aus Metall, jedoch vorzugsweise aus Kunststoff, wie Teflon, Nylon oder ähnlichem Material, sein. Das gleiche gilt für die Führungsrohre 36, 38. Sind die Führungen 74, 76 und/oder das Führungsrohr 28 aus Metall, so ergibt sich eine besonders gute Gleitlagerung.

Gegenüber dem beschriebenen Ausführungsbeispiel für die Führungs- und Steueranordnung gemäß der Erfindung sind verschiedene Abwandlungen möglich. Beim Ausführungsbeispiel liegen die Achsen der Säulen 74,76 und des Führungsrohres 28 in einer Ebene. Neben dieser bevorzugten Ausführungsform könnten die beiden Säulen 74,76 auch unter einem stupfen Winkel mit der Achse des Führungsrohres 28 als Scheitel angeordnet sein. Bei ausreichendem Hub des Kolbens im Zylinder 10 besteht die Möglichkeit, den Auslöser 40 mit dem Einstellheben 42 zu einem Teil zu kombinieren.

GRÜNECKER. KINKELDEY. STOCKMAIR & PARTNER

PATENTANWÄLTE
EUROPEAN PATENT ATTORNEYS

A. GRÜNECKER, DIPL-ING
DR. H. KINKELDEY, DIPL-ING
DR. W. STOCKMAIR, DIPL-ING AEE (CALTECH)
DR. K. SCHUMANN, DIPL-PHYS
P. H. JAKOB, DIPL-ING
DR. G. BEZOLD, DIPL-CHEM
W. MEISTER, DIPL-ING
H. HILGERS, DIPL-ING
DR. H. MEYER-PLATH, DIPL-ING

8000 MÜNCHEN 22
MAXIMILIANSTRASSE 43

EP 539-57/Sa

0083679

Arthur Eugster
Elektro-Haushaltgeräte
Hirschhalde 10, 8590 Romanshorn/Schweiz

Elektrischer Brotröster

Patentansprüche

1. Elektrischer Brotröster, mit einer in einer Röstkammer vertikal zwischen einer Broteinlegestellung und einer Röststellung entlang einer Führung bewegbaren, durch eine Feder (64) belasteten Brotbühne (50,54), einem aus einem einen Zylinder (10) mit einstellbarer Luftauslaßdüse (22) und einem in dem Zylinder (10) angeordneten, durch eine Feder (30) belasteten Kolben (2) bestehenden Zeitsteuerelement, einem den Kolben (2) und die Brotbühne (50,54) entgegen den auf sie wirkenden Federkräften bewegenden Betätigungselement (42), und einem mit dem Kolben (2) in Verbindung stehenden Mitnehmerelement (40), in dessen Bewegungsbahn ein Sperrelement (90,92) der Verrastung liegt, das die Brotbühne (50,54,56) freigibt, wenn es durch das Mitnehmerelement (40) betätigt wird, dadurch g e k e n n z e i c h n e t, daß am Mantel des Zylinders (10) parallel zu dessen Längsachse und sich diametral gegenüberliegend zwei Säulen (74,76) angebracht sind, auf deren unteren freien Teilen sowohl die Brotbühne (50,54) als auch das Mitnehmerelement (40) geführt sind.

2. Brotröster nach Anspruch 1, dadurch g e k e n n - z e i c h n e t, daß der von den Säulen (74,76) geführte Teil (50) der Brotbühne mit in die Säulen (74,76) nach oben ragenden Elementen (36,38) versehen ist, von denen mindestens eines (zum Beispiel 36) einen Rastfinger (90) besitzt, der in der Röststellung der Brotbühne (50,54) hinter einen Anschlag greift.

3. Brotröster nach Anspruch 2, dadurch g e k e n n - z e i c h n e t, daß die Elemente (36,38) der Brotbühne (50,54) in den Säulen (74,56) geführte Rohre sind, an denen als Rastfinger Zungen (90,92) angeformt sind, die in der Röststellung der Brotbühne (50,54) unter den Boden des Zylinders (10) greifen.

4. Brotröster nach einem der Ansprüche 1 bis 3, dadurch g e k e n n z e i c h n e t, daß als weitere Führung ein durch Zentralöffnungen in dem Mitnehmer (40) und dem von den Säulen (74,76) geführten Teil (50) der Brotbühne (50,54) konzentrisch zur Zylinderachse verlaufendes Führungsrohr (28) vorgesehen ist, in dem die Kolbenstange (12) geführt ist.

5. Brotröster nach einem der vorhergenden Ansprüche, dadurch g e k e n n z e i c h n e t, daß die rohr-

förmigen Säulen (74,76) in ihrem unteren Bereich an den einander zugekehrten Seiten offen sind, vorzugsweise einen im wesentlichen halbkreisförmigen Querschnitt besitzen.

6. Brotröster nach einem der vorhergehenden Ansprüche, dadurch g e k e n n z e i c h n e t, daß auch das Betätigungselement (42) an den Säulen (74,76) und/oder auf dem konzentrischen Führungsrohr (28) geführt ist.

7. Brotröster nach einem der vorhergehenden Ansprüche, dadurch g e k e n n z e i c h n e t, daß das Betätigungselement (42) und das Mitnehmerelement (40) gegeneinander in begrenztem Ausmaß verschiebbar gekuppelt sind.

8. Brotröster nach einem der Ansprüche 1 bis 6, dadurch g e k e n n z e i c h n e t, daß das Mitnehmerelement (40) und das Betätigungselement (42) von einem einzigen Teil gebildet werden.

9. Brotröster nach einem der vorhergehenden Ansprüche, dadurch g e k e n n z e i c h n e t, daß das Betätigungselement (42) und/oder das Mitnehmerelement (40) an den Längskanten der offenen Säulen (74,76) und/oder auf den Elementen (36,38) der Brotbühne (50, 54) geführt sind.

10. Brotröster nach einem der vorhergehenden Ansprüche, dadurch g e k e n n z e i c h n e t, daß sich in den Säulen (74,76) Zugfedern (64, 66) vom oberen Ende der Säulen (74,76) zu den Elementen (36,38) der Brotbühne (50,54) erstrecken.

Fig. 1

Fig.2

Fig.3

Fig.6

Fig.4

Fig.5

Europäisches
Patentamt

**EUROPÄISCHER RECHERCHENBERICHT**

Nummer der Anmeldung

EP 82 10 0200

| | **EINSCHLÄGIGE DOKUMENTE** | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | FR-A-2 353 261 (BOSCH-SIEMENS) <br><br> *Insgesamt* <br><br> --- | 1,2,5, 6,10 | A 47 J 37/08 |
| A | GB-A- 933 965 (MICROCELL LTD) <br> *Insgesamt* <br><br> ----- | 1 | |

**RECHERCHIERTE SACHGEBIETE (Int. Cl. ³)**

A 47 J
H 01 H
G 04 F

Der vorliegende Recherchenbericht wurde für alle Patentansprüche erstellt.

| Recherchenort <br> DEN HAAG | Abschlußdatum der Recherche <br> 01-09-1982 | Prüfer <br> SCHARTZ J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82